(19) Europäisches Patentamt
European Patent Office
Office européen des brevets

(11) **EP 4 675 375 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
*G05B 11/42* (2006.01)

(21) Application number: 23955874.5

(22) Date of filing: 09.11.2023

(52) Cooperative Patent Classification (CPC):
G05B 11/42; Y02E 60/10

(86) International application number:
PCT/CN2023/130682

(87) International publication number:
WO 2025/081556 (24.04.2025 Gazette 2025/17)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 17.10.2023 CN 202311349042

(71) Applicant: Hefei Gotion High-Tech Power Energy Co., Ltd.
Hefei, Anhui 230012 (CN)

(72) Inventors:
• ZHANG, Hongyu
Hefei, Anhui 230012 (CN)
• XU, Jiawen
Hefei, Anhui 230012 (CN)
• ZHANG, Wei
Hefei, Anhui 230012 (CN)

(74) Representative: Novagraaf Technologies
Bâtiment O2
2, rue Sarah Bernhardt
CS90017
92665 Asnières-sur-Seine Cedex (FR)

(54) **GENETIC ALGORITHM OPTIMIZATION-BASED FUZZY PID CONTROL METHOD, APPARATUS AND DEVICE**

(57) Disclosed are a genetic algorithm optimization-based fuzzy Proportional-Integral-Derivative (PID) control method, apparatus, and device. The method includes: S1, acquiring a preset standard electrode plate quality, a measured electrode plate quality, and a system default ray intensity, acquiring an ambient temperature parameter, retrieving a monitoring index, and monitoring the stability of a surface density measurement system according to the monitoring index; S2, setting a data sampling interval according to a preset system parameter of the surface density measurement system; S3, according to the data sampling interval, continuously sampling N pieces of data using a median average filtering algorithm, removing extreme values, calculating an arithmetic mean value of the N-2 pieces of data, and eliminating a sampling value deviation of the arithmetic mean value to obtain surface density sampling data; S4, performing fuzzification processing on the surface density sampling data, determining a fuzzy rule, and performing optimization in real time according to the fuzzy rule and by means of fuzzy reasoning, to obtain applicable PID parameters; and S5, according to the applicable PID parameters, controlling a servo motor of the surface density measurement system using a genetic algorithm. Therefore, the technical problems of difficulty in parameter tuning and low robustness of closed-loop control are solved.

EP 4 675 375 A1

Fig. 1

```
            ┌─────────────┐
            │    Start    │
            └─────────────┘
                   │
                   ▼
┌──────────────────────────────────────────────────┐      S1
│                                                    │
│   The stability of a measurement system is monitored │
│                                                    │
└──────────────────────────────────────────────────┘
                   │
                   ▼
┌──────────────────────────────────────────────────┐      S2
│                                                    │
│          A data sampling interval is set           │
│                                                    │
└──────────────────────────────────────────────────┘
                   │
                   ▼
┌──────────────────────────────────────────────────┐      S3
│                                                    │
│       Data parsing and processing is performed     │
│                                                    │
└──────────────────────────────────────────────────┘
                   │
                   ▼
┌──────────────────────────────────────────────────┐      S4
│  Fuzzy Proportional-Integral-Derivative (PID) closed-loop control │
│                    is performed                    │
└──────────────────────────────────────────────────┘
                   │
                   ▼
┌──────────────────────────────────────────────────┐      S5
│                                                    │
│  A servo motor is controlled according to parameters P, I, and D │
│                                                    │
└──────────────────────────────────────────────────┘
                   │
                   ▼
            ┌─────────────┐
            │     End     │
            └─────────────┘
```

## Description

### Technical Field

The present disclosure relates to the field of data processing in the battery manufacturing industry, and in particular to a genetic algorithm optimization-based fuzzy Proportional-Integral-Derivative (PID) control method, apparatus, and device.

### Background

In the battery manufacturing industry, especially in the field of lithium-ion power batteries for new energy vehicles and energy storage, there are increasingly higher requirements for battery consistency. The consistency of electrode plate coating is very critical. The lateral and longitudinal consistency of coating is mainly adjusted by adjusting a die gap and a pump speed. In the past, the die gap was mainly adjusted manually by adjusting a micrometer, which not only affected the production cycle, but also caused a huge waste of materials. With the rapid development of the lithium battery industry, in order to solve the problem of lateral consistency of coating, the industry has introduced smart dies. During coating, a gap of a slurry outlet is adjusted using a plurality of servo motor-driven choke blocks, and the size of the outlet is adjusted in a closed loop in real time according to a measurement value of a coating surface density, so as to achieve the requirement for uniform coating surface density. At present, the closed-loop control of the smart dies is mainly through the traditional PID algorithm, such as the existing Patent Application No. CN116140161A, entitled "Internal Circulation Air Flotation Oven, Coating Device, and PID Control Method Thereof". The internal circulation air flotation oven in the existing solution includes a box body, outer walls on both sides of the box body being respectively provided with openings, an electrode plate drying channel being formed between the openings on both sides, and a first air supply box and a second air supply box being respectively arranged on opposite sides of the electrode plate drying channel inside the box body; the first air supply box includes a first hot air circulation mechanism, a plurality of first air nozzles communicating with the first hot air circulation mechanism, and a first air return box, the first air return box being connected to the first hot air circulation mechanism; the second air supply box includes a second hot air circulation mechanism, a plurality of second air nozzles communicating with the second hot air circulation mechanism, and a second air return box, the second air return box being connected to the second hot air circulation mechanism; the first air nozzles and the second air nozzles both face the electrode plate drying channel to enable a transported electrode plate to be suspended; and air knife sealing apparatuses for controlling the opening and closing of the opening are respectively arranged on opposite sides of the opening, and the air knife sealing apparatuses are connected to air knife blowers arranged on the outer walls of the box body. The abovementioned traditional PID controller has the advantages of ease of implementation and debugging, but a coating system is a nonlinear, time-varying or multi-variable complex system, and there are many factors that affect the coating surface density. Relying solely on the traditional PID algorithm may easily lead to an erroneous closed loop.

The coating system used in the related art is the nonlinear, time-varying or multi-variable complex system, such as the existing Patent Application No. CN105280957A, entitled "Full-Automatic Production Line for Power Type Lithium Battery and Production Process Thereof". The automatic production line for the full-automatic production line in the existing process includes an electrode plate manufacturing unit, a battery assembling unit, a battery liquid injection unit, and a factory processing unit which are arranged in sequence, each unit having a corresponding automatic control system; the electrode plate manufacturing unit includes a mixer, a coating machine, a rolling machine, a continuous dryer, a slitting machine, and a punching machine which are arranged in sequence; the battery assembling unit includes a stacking machine, a lug welding circulation line, an automatic shell punching machine for an aluminum-plastic film, and a packaging line which are arranged in sequence; the battery liquid injection unit includes a liquid injection machine, a tunnel furnace, a hot-cold press machine, a chemical forming system, and a molding machine which are arranged in sequence; a single lithium battery is injected into a static tunnel furnace and baked online for more than 24 hours to ensure effective electrolyte infiltration; a PID temperature control mode is used to ensure that the temperature control accuracy of the lithium battery during baking is $\pm 5\,°C$; and when the baking is completed, the baked lithium battery is automatically loaded into a tray. In the abovementioned related art, the factors affecting the coating surface density include fluctuations of incoming materials and the influence of the temperature on a measurement device, which may cause the fluctuations in the surface density. Relying solely on the traditional PID algorithm may easily lead to the erroneous closed loop. In addition, in actual control systems, linear systems are only a minority after all, and most of them are nonlinear systems with uncertain system models. In application scenarios requiring the higher control accuracy, parameter tuning operations are difficult.

In summary, there are the technical problems of difficulty in parameter tuning and low robustness of closed-loop control in the related art.

## Summary

The technical problem to be solved by the present disclosure lies in how to solve the technical problems of difficulty in parameter tuning and low robustness of closed-loop control in the related art.

The present disclosure uses the following technical solutions to solve the above technical problems.

In a first aspect, embodiments of the present disclosure provide a genetic algorithm optimization-based fuzzy PID control method, including: acquiring a preset standard electrode plate quality, a measured electrode plate quality, and a system default ray intensity, acquiring an ambient temperature parameter of a surface density measurement system according to a preset temperature correction mechanism, retrieving a monitoring index according to the preset standard electrode plate quality, the measured electrode plate quality, the system default ray intensity, and the ambient temperature parameter, and monitoring the stability of the surface density measurement system according to the monitoring index; setting a data sampling interval according to a preset system parameter of the surface density measurement system; according to the data sampling interval, continuously sampling N pieces of data using a median average filtering algorithm, removing extreme values, calculating an arithmetic mean value of the N-2 pieces of data, and eliminating a sampling value deviation of the arithmetic mean value to obtain surface density sampling data; performing fuzzification processing on the surface density sampling data, determining a fuzzy rule, and performing optimization in real time according to the fuzzy rule and by means of fuzzy reasoning, to obtain applicable PID parameters; and according to the applicable PID parameters, controlling a servo motor of the surface density measurement system using a genetic algorithm.

In a second aspect, the embodiments of the present disclosure provide a genetic algorithm optimization-based fuzzy PID control apparatus, including: a system stability monitoring module, configured to acquire a preset standard electrode plate quality, a measured electrode plate quality, and a system default ray intensity, acquire an ambient temperature parameter of a surface density measurement system according to a preset temperature correction mechanism, retrieve a monitoring index according to the preset standard electrode plate quality, the measured electrode plate quality, the system default ray intensity, and the ambient temperature parameter, and monitor the stability of the surface density measurement system according to the monitoring index; a time interval setting module, configured to set a data sampling interval according to a preset system parameter of the surface density measurement system; a sampling processing module, configured to, according to the data sampling interval, continuously sample N pieces of data using a median average filtering algorithm, remove extreme values, calculate an arithmetic mean value of the N-2 pieces of data, and eliminate a sampling value deviation of the arithmetic mean value to obtain surface density sampling data, the sampling processing module being connected to the time interval setting module; a PID parameter tuning module, configured to perform fuzzification processing on the surface density sampling data, determine a fuzzy rule, and perform optimization in real time according to the fuzzy rule and by means of fuzzy reasoning, to obtain applicable PID parameters, the PID parameter tuning module being connected to the sampling processing module; and a servo motor control module, configured to, according to the applicable PID parameters, control a servo motor of the surface density measurement system using a genetic algorithm, the servo motor control module being connected to the PID parameter tuning module.

In a third aspect, the embodiments of the present disclosure provide a genetic algorithm optimization-based fuzzy PID control device, including: a memory, a processor, a communication interface, and a bus. The memory may include a large capacity memory for data or instructions. By way of example, but not limitation, the memory may include a Hard Disk Drive (HDD), a floppy disk drive, a flash memory, an optical disk, a magneto-optical disk, a magnetic tape, or a Universal Serial Bus (USB) drive or a combination of two or more thereof. Where appropriate, the memory may include a removable or non-removable (or fixed) medium. Where appropriate, the memory may be inside or outside a device for determining a battery operating voltage curve. In a specific embodiment, the memory is a non-volatile solid-state memory. In a specific embodiment, the memory includes a Read-Only Memory (ROM). Where appropriate, the ROM may be a mask-programmed ROM, a Programmable ROM (PROM), an Erasable PROM (EPROM), an Electrically EPROM (EEPROM), an Electrically Alterable ROM (EAROM) or a flash memory or a combination of two or more thereof.

Compared with the related art, the present disclosure has the following advantages: the present disclosure combines a fuzzy PID control algorithm with the production rule, and controls the PID algorithm based on the rule, thereby improving the robustness of the closed-loop control, reducing the erroneous closed loop, and improving the production quality. The present disclosure combines the fuzzy PID control algorithm with the production rule, combines a large number of prior knowledge in actual production with the control algorithm, and controls the PID algorithm based on the rule, thereby improving the robustness of closed-loop control, enhancing the anti-interference ability of the closed-loop coating system, reducing the erroneous closed loop, and improving the production quality.

The present disclosure uses a plurality of groups of data to process according to the median average filtering algorithm, and directly eliminates a surface density measurement value when the measurement system gives an alarm. The median average filtering algorithm combines a median filtering method with an arithmetic average filtering method. The filtering algorithm may eliminate the sampling value deviation caused by pulse interference for accidental pulse interference.

The present disclosure establishes a specific sampling interval, and sets the sampling interval for a surface density measurement instrument at an oven outlet according to the sampling interval count and the scanning period of the surface density instrument, thereby ensuring the effectiveness of closed-loop control.

The present disclosure aims at the problem of the difficulty in accuracy control of nonlinear systems and systems with uncertain models commonly used in the existing control systems, and uses a fuzzy PID intelligent algorithm to quantify and accurately control the model in a case where a control model is unknown.

The present disclosure uses an integral performance index of an error absolute value time as the minimum objective function for parameter selection, and can obtain satisfactory dynamic characteristics of the transition process. The present disclosure adds a quadratic term of a control input into the objective function, which can prevent the control energy from being too large. The present disclosure uses a punishment function, and takes the overshoot amount as the item of the optimal index to avoid overshoot.

The present disclosure solves the technical problems of difficulty in parameter tuning and low robustness of closed-loop control in the related art.

**Brief Description of the Drawings**

Fig. 1 is a schematic diagram of basic steps of a genetic algorithm optimization-based fuzzy PID control method in one embodiment of the present disclosure.

Fig. 2 is a schematic diagram of an X-Ray surface density operating principle in one embodiment of the present disclosure.

Fig. 3 is a schematic diagram of setting a data sampling interval in one embodiment of the present disclosure.

Fig. 4 is a schematic diagram of region division in a data parsing and processing process in one embodiment of the present disclosure.

Fig. 5 is a flowchart of an overall framework of fuzzy PID closed-loop control in one embodiment of the present disclosure.

Fig. 6 is a schematic diagram of fuzzy PID control logic data flow processing in one embodiment of the present disclosure.

Fig. 7 is a specific flowchart of PID surface density control in one embodiment of the present disclosure.

Fig. 8 is a specific flowchart of a genetic algorithm operation in one embodiment of the present disclosure.

Fig. 9 is a schematic structural diagram of a genetic algorithm optimization-based fuzzy PID control device in one embodiment of the present disclosure.

**Detailed Description of the Embodiments**

In order to make the objectives, technical solutions and advantages of the embodiments of the present disclosure clearer, the technical solutions in the embodiments of the present disclosure will be clearly and completely described in conjunction with the embodiments of the present disclosure. It is apparent that the described embodiments are only a part of the embodiments of the present disclosure, and not all of them. All other embodiments obtained by those of ordinary skill in the art based on the embodiments of the present disclosure without creative efforts are within the scope of protection of the present disclosure.

Embodiment 1

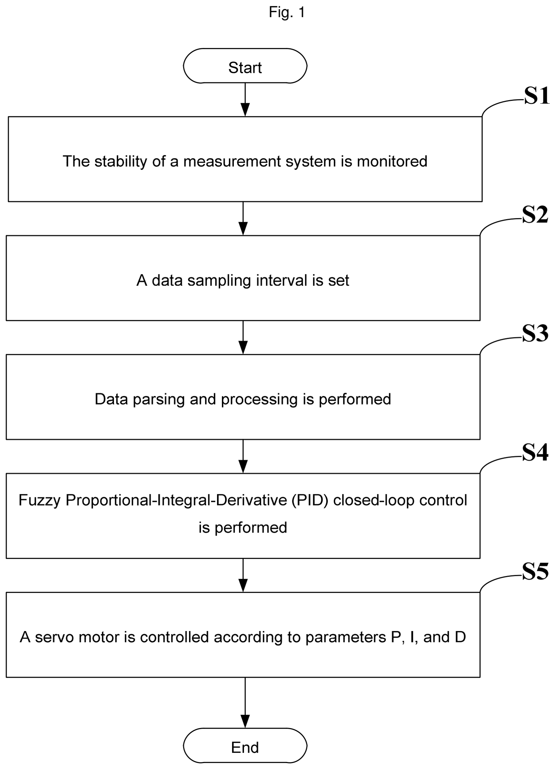

Fig. 1 is a schematic diagram of basic steps of a genetic algorithm optimization-based fuzzy PID control method in one embodiment of the present disclosure. As shown in Fig. 1, the present disclosure provides a genetic algorithm optimization-based fuzzy PID control method, including the following basic steps.

At S1, the stability of a measurement system is monitored.

In the present embodiment, in order to ensure the accuracy of closed-loop control, the stability of the measurement device is first ensured, and based on this closed-loop control system, the stability monitoring of the measurement system is added.

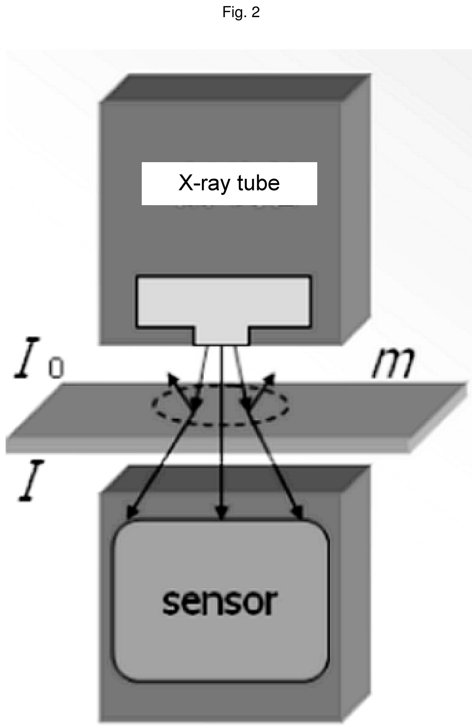

Fig. 2 is a schematic diagram of an X-Ray surface density operating principle in one embodiment of the present disclosure. As shown in Fig. 2, in the present embodiment, due to the existence of a temperature correction mechanism, if a calibration state of a surface density measurement instrument is consistent with the ecology, an online measurement value is accurate. If a production state (temperature or humidity) changes, the measurement system has become unstable, resulting in inaccurate measurement value. If closed-loop control is performed based on this measurement value, a quality risk may be increased. In the present embodiment, associated information of the production state includes, but is not limited to, temperature and humidity.

$$m_{electrode\ plate} = \frac{1}{\lambda} \ln \frac{I_0}{I_{electrode\ plate}},$$

and

$$m_{sample} = \frac{1}{\lambda} \ln \frac{I_0}{I_{sample}} \Rightarrow \lambda = \frac{1}{m_{sample}} \ln \frac{I_0}{I_{sample}}.$$

Where $I_0$ represents a ray intensity before penetrating a material, $I_{sample}$ represents a ray intensity after penetrating a sample, $I_{electrode\ plate}$ represents a ray intensity after penetrating an electrode plate, $m_{sample}$ represents a standard plate quality, and $m_{electrode\ plate}$ represents a measured object quality.

In the present embodiment, it is obtained by resolving:

$$m_{electrode\ plate} = m_{sample} \cdot \frac{\ln \dfrac{I_0}{I_{electrode\ plate}}}{\ln \dfrac{I_0}{I_{sample}}}.$$

In the present embodiment, the current measurement system defaults to:

$$I_0 = I_{sample}.$$

However, the actual situation is that the ambient temperature and humidity are constantly changing, and the ray intensity and the performance of a ray sensor are slowly drifting. Therefore, the stability monitoring of an X-Ray surface density measurement instrument is established. A monitoring index is as follows:

$$T = \ln \frac{I_0}{I_{sample}}.$$

In the present embodiment, the stability monitoring of the measurement system is mainly configured to represent the stability of the measurement system, and mainly applied when the measurement system is affected by external factors, and at this time, the value measured by the measurement system is directly discarded.

At S2, a data sampling interval is set.

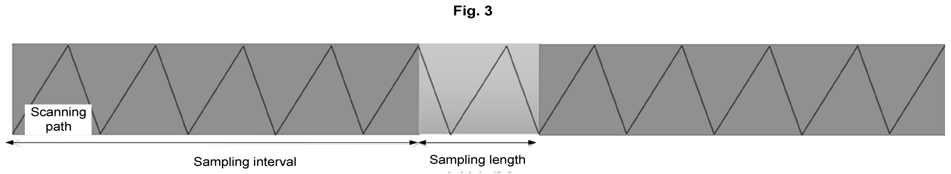

Fig. 3 is a schematic diagram of setting a data sampling interval in one embodiment of the present disclosure. As shown in Fig. 3, in the present embodiment, in order to ensure the effectiveness of closed-loop control, an appropriate sampling interval needs to be established. Since the surface density measurement instrument is located at an oven outlet, the sampling interval needs to be set, and an interval time is an oven length/coating speed. A sampling interval count is determined according to a scanning period of the surface density measurement instrument. For example, if the oven length may be, for example, 50 m, the coating speed may be, for example, 25 m/min, and the scanning period of the surface density measurement instrument is 10 s, then the sampling interval may be, for example, 12 times.

At S3, data parsing and processing is performed.

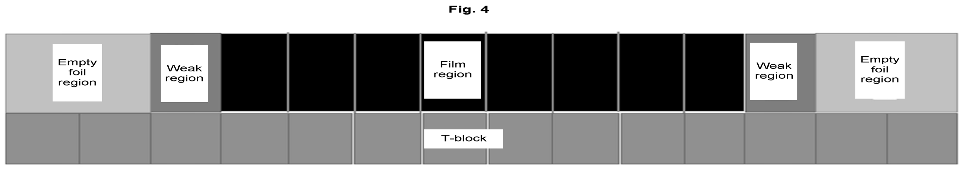

Fig. 4 is a schematic diagram of region division in a data parsing and processing process in one embodiment of the present disclosure. As shown in Fig. 4, in the present embodiment, surface density detection data is output as an average number of regions equally divided by a film region. Therefore, when customizing a die, the film region and T-block are designed to have a one-to-one relationship. In addition, since a coating weight curve fluctuates, a controller cannot achieve a closed loop through a group of sampling data, and a plurality of groups of data need to be processed according to a median average filtering algorithm, a surface density measurement value is directly eliminated when the measurement system gives an alarm.

The median average filtering algorithm used in the present embodiment combines a median filtering method with an arithmetic average filtering method, continuously samples N pieces of data, removes a maximum value and a minimum value, and then calculates an arithmetic mean value of the N-2 pieces of data. The filtering algorithm may eliminate the sampling value deviation caused by pulse interference for accidental pulse interference. In the present embodiment, a selection interval of the N value includes, but is not limited to, [3, 14].

At S4, fuzzy PID closed-loop control is performed.

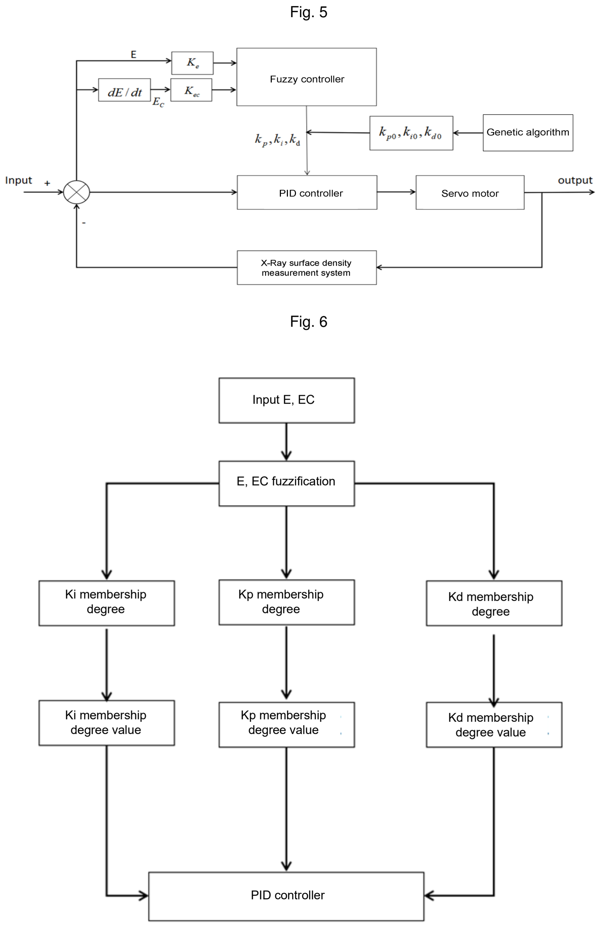

Fig. 5 is a flowchart of an overall framework of fuzzy PID closed-loop control in one embodiment of the present disclosure. As shown in Fig. 5, in the process of the fuzzy PID closed-loop control in the present embodiment, optimization is performed in real time according to a specific fuzzy rule and by means of fuzzy reasoning, so as to overcome the shortcoming that the traditional PID algorithm cannot adjust PID parameters in real time.

In the present embodiment, the S4 of performing fuzzy PID closed-loop control further includes the following specific steps.

At S41, fuzzification processing is performed.

In the present embodiment, the control system determines a deviation E of a current distance standard value and Ec between the current deviation and the previous deviation through the surface density data acquired by X-Ray.

In the present embodiment, the X-Ray surface density measurement instrument may acquire the surface density data, and process the surface density to obtain two values: a deviation value E from the target value and a change (difference) Ec between the current deviation and the previous deviation. Fuzzification is performed on the two values.

In the present embodiment, fuzzy subsets of E and Ec are determined. In the present embodiment, linguistic variables are selected for PID control. In order to express the fuzzy subset, in the present embodiment, the linguistic variables, include, but are not limited to, Negative Big (NB), Negative Medium (NM), Negative Small (NS), Zero (ZO), Positive Small (PS), Positive Medium (PM), and Positive Big (PB). Therefore, in the present embodiment, the fuzzy subsets of e and ec are defined as {NB, NM, NS, ZO, PS, PM, PB}, and for surface density process control, the tolerance is $\pm 2$. The interval (-2, 2) is divided into 8 parts, which are defined as:

{-2-1.5, -1, -0.5, 0, 0.5, 1, 1.5, 2}.

In the present embodiment, any physical quantity measurement signal has a range, which is recorded as Vmax and Vmin and is the same as an expected range of a value naturally set during PID adjustment, so that the range of the deviation e is within the range of Vmin-Vmax to Vmax-Vmin, and the incremental range of the deviation is twice that of the deviation e. In the present embodiment, linear quantization is used, and a functional relationship thereof includes:

a deviation range function relationship:

$$f(e) = \frac{6*e}{V_{max} - V_{min}}$$

and
a deviation increment range function relationship:

$$f(ec) = \frac{6*ec}{2(V_{max} - V_{min})}$$

.

In the present embodiment, E and Ec are quantized by the abovementioned quantization function, and the determined fuzzy subset may be obtained by, for example, rounding off. However, considering that the changes of E and Ec are continuous, rounding off may affect the control accuracy, so that in the present embodiment, a membership degree is introduced to achieve this process.

In the present embodiment, the membership degrees of E and Ec on the fuzzy subset are determined. The membership degree is a value between 0 and 1, which is configured to describe the degree to which a corresponding input belongs to a certain fuzzy subset. In the present embodiment, a triangular membership degree function is used.

At S42, a fuzzy rule is determined.

In the present embodiment, fuzzy reasoning is performed according to a given fuzzy rule.

In the present embodiment, the function relationship in a fuzzy combing operation is as follows.

In the present embodiment, since fuzzy reasoning is the foundation of fuzzy control, in order to achieve fuzzy reasoning, a rule base or knowledge base of fuzzy reasoning is first established, and then an inference engine is established for reasoning.

In the present embodiment, the fuzzy rule base is established to adjust three parameters Kp, Ki, and Kd, so that the fuzzy rule base of these three variables should be established.

Kp fuzzy rule table:

In the present embodiment, in the PID controller, the selection of the Kp value is determined by a response speed of the system. Increasing Kp can improve the response speed and reduce the steady-state deviation. However, too large Kp value may produce large overshoot, and even make the system unstable. Reducing Kp can reduce the overshoot and improve the stability, but too small Kp may slow down the response speed and prolong the adjustment time. Therefore, in the early stage of adjustment, a larger Kp value should be appropriately taken to improve the response speed, while in the middle stage of adjustment, a smaller Kp value should be taken to make the system have a small overshoot and ensure a certain response speed; and in the later stage of the adjustment process, the Kp value is adjusted to a larger value to reduce the static error and improve the control accuracy.

| $\Delta K_p$ | | Ec | | | | | | |
|---|---|---|---|---|---|---|---|---|
| | | NB | NM | NS | ZO | PS | PM | PB |
| E | NB | PB | PB | PM | PM | PS | ZO | ZO |
| | NM | PB | PB | PM | PS | PS | ZO | NS |
| | NS | PM | PM | PM | PS | ZO | NS | NM |
| | ZO | PM | PM | PS | ZO | NS | NM | NM |
| | PS | PS | PS | ZO | NS | NS | NM | NM |
| | PM | PS | ZO | NS | NM | NM | NM | NB |
| | PB | ZO | ZO | NM | NM | NM | NB | NB |

In the present embodiment, based on the above description, the fuzzy rule of Kp is defined as follows: a Ki fuzzy rule is designed.

| $\Delta K_i$ | | Ec | | | | | | |
|---|---|---|---|---|---|---|---|---|
| | | NB | NM | NS | ZO | PS | PM | PB |
| E | NB | NB | NB | NM | NM | NS | ZO | ZO |
| | NM | NB | NB | NM | NS | NS | ZO | ZO |
| | NS | NB | NM | NS | NS | ZO | PS | PS |
| | ZO | NM | NM | NS | ZO | PS | PM | PM |
| | PS | NM | NS | ZO | PS | PS | PM | PM |
| | PM | ZO | ZO | PS | PS | PM | PB | PB |
| | PB | ZO | ZO | PS | PM | PM | PB | PB |

In system control, integral control is mainly configured to eliminate the steady-state deviation of the system. Due to some reasons (such as saturation nonlinearity, etc.), the integral process may produce integral saturation in the early stage of the adjustment process, thereby causing larger overshoot in the adjustment process. Therefore, in the early stage of the adjustment process, in order to prevent integral saturation, the integral effect should be weaker, or even zero; in the middle stage of adjustment, in order to avoid affecting the stability, the integral effect should be relatively moderate; and finally, in the later stage of the process, the integral effect should be strengthened to reduce the adjustment static error. According to the above analysis, the Ki fuzzy rule formulated is as follows.

Kd fuzzy rule design:

The adjustment of the differential link is mainly introduced for the large inertia process, and the function of a differential link coefficient is to change the dynamic characteristics of the system. The differential link coefficient of the system can reflect the trend of signal change, and introduce an effective early correction signal into the system before the deviation signal changes too much, thereby speeding up the response speed, reducing the adjustment time, eliminating oscillation, and finally changing the dynamic performance of the system. Therefore, the selection of the Kd value has a great influence on the dynamic characteristics of adjustment. If the Kd value is too large, the braking may be advanced in the adjustment process, resulting in too long adjustment time. If the Kd value is too small, the braking may lag behind in the adjustment process, resulting in an increase in overshoot. According to the actual process experience, in the early stage of adjustment, the differential effect should be increased, so that overshoot can be smaller or even avoided. In the middle stage, since the adjustment characteristics are relatively sensitive to the change of the Kd value, the Kd value should be appropriately smaller and kept fixed. Then, in the later stage of adjustment, the Kd value should be reduced to reduce the braking effect of the controlled process, thereby compensating for the prolonged time of the adjustment process caused by the larger Kd value in the early stage of the adjustment process. According to the above analysis, the Kd fuzzy rule formulated is as follows.

| $\Delta K_d$ | | Ec | | | | | | |
|---|---|---|---|---|---|---|---|---|
| | | NB | NM | NS | ZO | PS | PM | PB |
| E | NB | PS | NS | NB | NB | NB | NM | PS |
| | NM | PS | NS | NB | NM | NM | NS | ZO |
| | NS | ZO | NS | NM | NM | NS | NS | ZO |
| | ZO | ZO | NS | NS | NS | NS | NS | ZO |
| | PS | ZO | ZO | ZO | ZO | ZO | ZO | ZO |
| | PM | PB | NS | PS | PS | PS | PS | PB |
| | PB | PB | PM | PM | PM | PS | PS | PB |

At S43, defuzzification is performed.

Fig. 6 is a schematic diagram of fuzzy PID control logic data flow processing in one embodiment of the present disclosure. As shown in Fig. 6, in the present embodiment, fuzzy parameters are parsed, and reasonable parameters P, I, and D are output to control a servo motor.

In the present embodiment, fuzzy processing is performed on the obtained target object, so that the target object corresponds to a specific physical quantity. According to a fuzzy reasoning result, desired values of Kp, Ki, and Kd are obtained.

At S5, the servo motor is controlled according to the parameters P, I, and D.

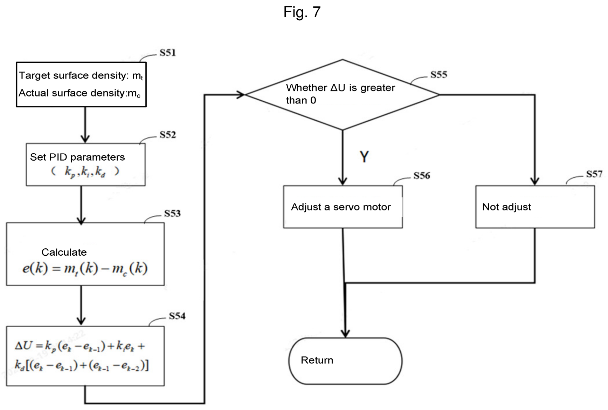

Fig. 7 is a specific flowchart of PID surface density control in one embodiment of the present disclosure. As shown in Fig. 7, in the present embodiment, the S5 of controlling the servo motor further includes the following specific steps of PID surface density control.

At S51, a target surface density mt and an actual surface density $m_c$ are determined.

At S52, PID parameters $k_p$, $k_i$, and $k_d$ are set.

At S53, $e(k) = m_t(k) - m_c(k)$ is calculated.

At S54, the following is calculated.

$$\Delta U = k_p(e_k - e_{k-1}) + k_i e_k + k_d[(e_k - e_{k-1}) + (e_{k-1} - e_{k-2})]$$

At S55, it is determined whether ∆U is greater than 0.

At S56, if yes, the servo motor is adjusted.

At S57, if not, the servo motor is not adjusted.

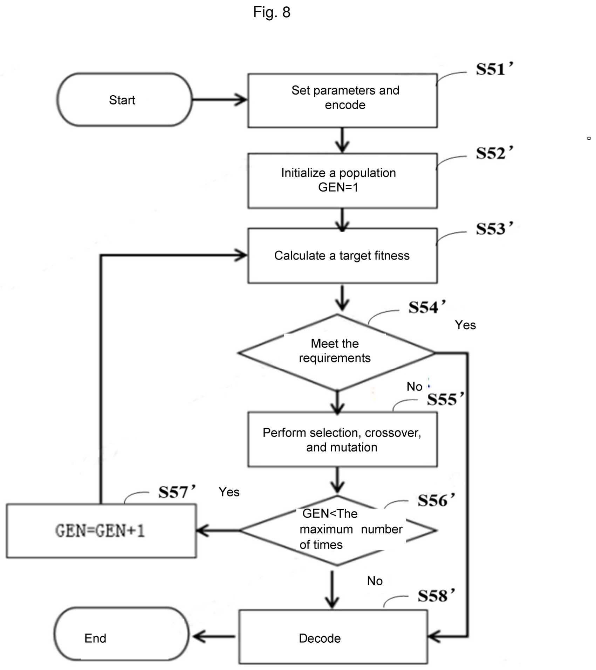

Fig. 8 is a specific flowchart of a genetic algorithm operation in one embodiment of the present disclosure. As shown in Fig. 8, in the present embodiment, the specific flow of the genetic algorithm operation used in the S5 of controlling the servo motor further includes the following operations.

At S51', parameters are set and encoded.

At S52', a population GEN=1 is initialized.

At S53', a target fitness is calculated.

At S54', it is determined whether the target fitness meets the requirements.

At S55', if not, selection, crossover, and mutation operations are performed, and if yes, S58' is jumped.

At S56', it is determined whether GEN is greater than the maximum number of times.

At S57', if yes, GEN=GEN+1.

At S58', if not, a decoding operation is performed.

In the present embodiment, a PID control signal is:

$$U(t) = k_p[e(t) + \frac{1}{k_i}\int_0^t e(t)dt + k_d \frac{de(t)}{dt}]$$

.

In the present embodiment, a transfer function is:

$$D(s) = k_p(1 + \frac{1}{k_i s} + k_d s)$$

.

Where $k_p$ is a proportionality factor, $k_i$ is an integral time constant, $k_d$ is a differential time constant, e(t) is a deviation, and u(t) is a control quantity.

In the present embodiment, a triangular membership degree function is designed, and the same quantization target, i.e., universe of discourse {-2, 2}, is used, so that at a certain time, the membership degrees of the fuzzy variables where the input and the output are located are the same. Based on this, a center of gravity method is used to calculate the quantization value of each output quantity. A formula thereof is as follows:

$$Z_0 = \frac{\sum_{i=0}^{n} M_i \bullet F_i}{\sum_{i=0}^{n} M_i}$$

.

Where F is a fuzzy quantization value and M is a membership degree value.

In the present embodiment, the PID parameters are initialized and assigned using the genetic algorithm. In order to obtain satisfactory dynamic characteristics of the transition process, an integral performance index of an error absolute value time is used as the minimum objective function for parameter selection. In order to prevent the control energy from being too large, a quadratic term of the control input is added to the objective function. At the same time, in order to avoid overshoot, a penalty function is used, and the overshoot amount is taken as the item of the optimal index.

$$J = \begin{cases} \int\limits_0^\infty \left( w_1 \left| e_t \right| + w_2 u^2(t) \right) dt + w_3 t_u, & ey(t) > 0 \\ \int\limits_0^\infty \left( w_1 \left| e_t \right| + w_2 u^2(t) + w_4 \left| ey(t) \right| \right) dt + w_3 t_u, & ey(t) < 0 \end{cases} \qquad .$$

Where e(t) is a system error, u(t) is an output of a controller, and $t_u$ is a step signal rise time, $w_1$, $w_2$, and $w_3$ are weights corresponding to e(t), u(t), and $t_u$ respectively, ey(t) =y(t)-y(t-1), y(t) is an output of a control object, and $w_4$ is a weight.

In the process of applying the genetic algorithm in the present embodiment, first, a binary coding method is used, and three decision variables kP, ki, and kD are respectively represented by binary coding with a length of 10 bits. The selection of the optimal index is the same as the PID tuning of a decimal coded genetic algorithm.

In the present embodiment, the number of samples used in the genetic algorithm is Size=30.

In the present embodiment, a crossover probability and a mutation probability are respectively: Pc=0.60, Mu=0.001-[1: 1: Size]×0.001/Size.

In the present embodiment, a value range of the parameter kP is [0, 20], a value range of ki and kD is [0, 1], and the values of w1, w2, w3, and w4 are the same as the PID tuning of the decimal coding genetic algorithm.

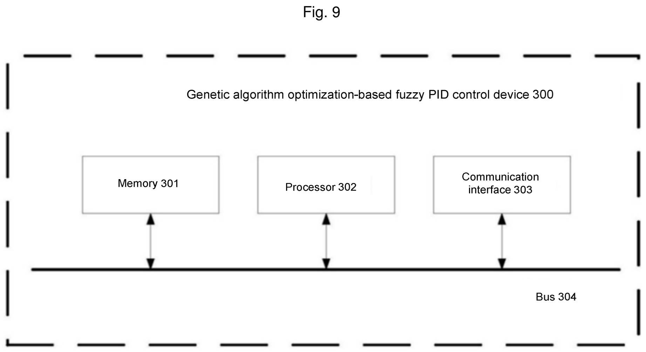

Fig. 9 is a schematic structural diagram of a genetic algorithm optimization-based fuzzy PID control device in one embodiment of the present disclosure. As shown in Fig. 9, a device 300 for determining a battery operating voltage curve includes a memory 301, a processor 302, a communication interface 303, and a bus 304.

The memory 301 may include a large capacity memory for data or instructions. By way of example, but not limitation, the memory 301 may include an HDD, a floppy disk drive, a flash memory, an optical disk, a magneto-optical disk, a magnetic tape, or a USB drive or a combination of two or more thereof. Where appropriate, the memory 301 may include a removable or non-removable (or fixed) medium. Where appropriate, the memory 301 may be inside or outside the device 300 for determining the battery operating voltage curve. In a specific embodiment, the memory 301 is a non-volatile solid-state memory. In a specific embodiment, the memory 301 includes an ROM. Where appropriate, the ROM may be a mask-programmed ROM, a PROM, an EPROM, an EEPROM, an EAROM or a flash memory or a combination of two or more thereof.

In one example, the processor 302 may include a Central Processing Unit (CPU), or an Application-Specific Integrated Circuit (ASIC), or the processor 302 may be configured to implement one or more integrated circuits of the embodiments of the present disclosure.

The communication interface 303 is mainly configured to achieve communication between modules and units in the embodiments of the present disclosure.

The memory 301, the processor 302, and the communication interface 303 are connected through the bus 304 and communicate with each other.

That is, the memory 301 is configured to store a program code. The processor 302 runs a program corresponding to the executable program code stored in the memory 301 by reading the executable program code for executing a genetic algorithm optimization-based fuzzy PID control method. The genetic algorithm optimization-based fuzzy PID control method includes, but is not limited to, S1 to S8 in the above embodiments.

It is to be noted that the various embodiments in the present specification are described in a progressive manner, the same or similar parts between the various embodiments can be referred to each other, and each embodiment focuses on differences from other embodiments. For the apparatus embodiments, the relevant parts may be referred to the partial description of the method embodiment. The present disclosure is not limited to the specific steps and structures described above and shown in the figures. Those skilled in the art may make various changes, modifications, and additions, or change the order between steps, upon appreciation of the spirit of the present disclosure. Also, for the sake of brevity, a detailed description of known method techniques is omitted herein.

The functional modules and functional units shown in the above structural block diagrams may be implemented as hardware, software, firmware, or a combination thereof. When implemented in hardware, it may be, for example, an electronic circuit, an ASIC, appropriate firmware, a plug-in, a function card, or the like. When implemented in software, elements of the present disclosure are programs or code segments that are configured to perform required tasks. The program or code segment may be stored in a machine-readable medium or transmitted over a transmission medium or communication link by a data signal carried in a carrier wave. The "machine-readable medium" may include any medium capable of storing or transmitting information.

**Claims**

1. A genetic algorithm optimization-based fuzzy Proportional-Integral-Derivative (PID) control method, wherein the method comprises:

   S1, acquiring a preset standard electrode plate quality, a measured electrode plate quality, and a system default ray intensity, acquiring an ambient temperature parameter of a surface density measurement system according to a preset temperature correction mechanism, retrieving a monitoring index according to the preset standard electrode plate quality, the measured electrode plate quality, the system default ray intensity, and the ambient temperature parameter, and monitoring a stability of the surface density measurement system according to the monitoring index;
   S2, setting a data sampling interval according to a preset system parameter of the surface density measurement system;
   S3, according to the data sampling interval, continuously sampling N pieces of data using a median average filtering algorithm, removing extreme values, calculating an arithmetic mean value of N-2 pieces of data, and eliminating a sampling value deviation of the arithmetic mean value to obtain surface density sampling data;
   S4, performing fuzzification processing on the surface density sampling data, determining a fuzzy rule, and performing optimization in real time according to the fuzzy rule and by means of fuzzy reasoning, to obtain applicable PID parameters; and
   S5, according to the applicable PID parameters, controlling a servo motor of the surface density measurement system using a genetic algorithm.

2. The genetic algorithm optimization-based fuzzy PID control method as claimed in claim 1, wherein the S1 comprises:

   S11, retrieving the preset standard electrode plate quality using a following logic:

   $$m_{electrode\ plate} = \frac{1}{\lambda} \ln \frac{I_0}{I_{electrode\ plate}} \ .$$

   S12, retrieving the measured electrode plate quality using a following logic:

   $$m_{sample} = \frac{1}{\lambda} \ln \frac{I_0}{I_{sample}} \Rightarrow \lambda = \frac{1}{m_{sample}} \ln \frac{I_0}{I_{sample}} \ ;$$

   where $I_0$ represents a ray intensity before penetrating a material, $I_{sample}$ represents a ray intensity after penetrating a sample, $I_{electrode\ plate}$ represents a ray intensity after penetrating an electrode plate, $m_{sample}$ represents a standard plate quality, $m_{electrode\ plate}$ represents the measured electrode plate quality, and $\lambda$ represents an absorption coefficient per unit area of a film; and
   S13, retrieving the monitoring index according to the ray intensity after penetrating the sample and the ray intensity before penetrating the material:

   $$T = \ln \frac{I_0}{I_{sample}} \ .$$

3. The genetic algorithm optimization-based fuzzy PID control method as claimed in claim 2, wherein, in the S12, a relationship between the preset standard electrode plate quality, the measured electrode plate quality, the ray intensity after penetrating the sample, and the ray intensity before penetrating the material is expressed according to a following logic:

$$m_{electrode\ plate} = m_{sample} \cdot \frac{\ln \dfrac{I_0}{I_{electrode\ plate}}}{\ln \dfrac{I_0}{I_{sample}}} \cdot$$

**4.** The genetic algorithm optimization-based fuzzy PID control method as claimed in claim 1, wherein the S2 further comprises:

S21, retrieving an interval time according to an oven length and a coating speed of the surface density measurement system;
S22, determining a sampling interval count according to a scanning period of the surface density measurement system; and
S23, determining the data sampling interval according to the interval time and the sampling interval count.

**5.** The genetic algorithm optimization-based fuzzy PID control method as claimed in claim 1, wherein the S4 comprises:

S41, processing the surface density sample data to obtain a deviation value and a deviation change value, acquiring a deviation range function and a deviation increment range function according to the deviation value and the deviation change value, performing fuzzification processing to obtain a deviation fuzzy subset and a deviation change fuzzy subset, and determining a membership degree of a deviation on the fuzzy subset and a membership degree of a deviation change on the fuzzy subset according to the deviation fuzzy subset and the deviation change fuzzy subset;
S42, establishing a fuzzy reasoning rule base to design the fuzzy rule of the PID parameters, to acquire a fuzzy reasoning result; and
S43, performing a defuzzification operation according to the fuzzy reasoning result to acquire the applicable PID parameters.

**6.** The genetic algorithm optimization-based fuzzy PID control method as claimed in claim 5, wherein the S41 comprises:

S411, expressing the deviation range function using a following logic:

$$f(e) = \frac{6*e}{V_{max} - V_{min}};$$

S412, expressing the deviation increment range function using a following logic:

$$f(ec) = \frac{6*ec}{2(V_{max} - V_{min})};$$

and
S413, designing a triangular membership degree function using a following logic:

$$Z_0 = \frac{\sum_{i=0}^{n} M_i \bullet F_i}{\sum_{i=0}^{n} M_i};$$

where F is a fuzzy quantization value and M is a membership degree value.

7. The genetic algorithm optimization-based fuzzy PID control method as claimed in claim 1, wherein the S5 comprises:

S51, acquiring a target surface density, an actual surface density, and the applicable PID parameters and retrieving a relationship between a surface density and the PID parameters according to the target surface density, the actual surface density, and the applicable PID parameters:

$$e(k) = m_t(k) - m_c(k)$$ ;

where mt represents the target surface density, $m_c$ represents the actual surface density, $e_k$, $e_{k-1}$, and $e_{k-2}$ represent differences between the actual surface density and the target surface density at times k-1, k-2, and k-3 respectively;

S52, retrieving a potential parameter according to the relationship between the surface density and the PID parameters:

$$\Delta U = k_p(e_k - e_{k-1}) + k_i e_k + k_d[(e_k - e_{k-1}) + (e_{k-1} - e_{k-2})]$$ ;

and

S53, controlling an adjustment state of the servo motor according to the potential parameter $\Delta U$.

8. The genetic algorithm optimization-based fuzzy PID control method as claimed in claim 1, wherein, in the S5, according to the applicable PID parameters, a PID control signal is obtained by processing using the genetic algorithm:

$$U(t) = k_p [e(t) + \frac{1}{k_i} \int_0^t e(t)dt + k_d \frac{de(t)}{dt}]$$ ;

in the genetic algorithm, a transfer function is determined using a following logic:

$$D(s) = k_p (1 + \frac{1}{k_i s} + k_d s)$$ ;

where $k_p$ is a proportionality factor, $k_i$ is an integral time constant, $k_d$ is a differential time constant, e(t) is a deviation, and u(t) is a control quantity.

9. The genetic algorithm optimization-based fuzzy PID control method as claimed in claim 1, wherein, in the S5, the applicable PID parameters are initialized and assigned using the genetic algorithm, and an integral performance index of an error absolute value time is retrieved as a minimum objective function for parameter selection, wherein the minimum objective function for parameter selection is determined using a following logic:

$$J = \begin{cases} \int_0^\infty (w_1|e_t| + w_2 u^2(t))dt + w_3 t_u, & ey(t) > 0 \\ \int_0^\infty (w_1|e_t| + w_2 u^2(t) + w_4|ey(t)|)dt + w_3 t_u, & ey(t) < 0 \end{cases}$$ ;

where e(t) is a system error, u(t) is an output of a controller, and $t_u$ is a step signal rise time, $w_1$, $w_2$, and $w_3$ are weights

corresponding to e(t), u(t), and $t_u$ respectively, cy(t) =y(t)-y(t-1), y(t) is an output of a control object, and $w_4$ is a weight.

10. A genetic algorithm optimization-based fuzzy Proportional-Integral-Derivative (PID) control apparatus, wherein the apparatus comprises:

a system stability monitoring module, configured to acquire a preset standard electrode plate quality, a measured electrode plate quality, and a system default ray intensity, acquire an ambient temperature parameter of a surface density measurement system according to a preset temperature correction mechanism, retrieve a monitoring index according to the preset standard electrode plate quality, the measured electrode plate quality, the system default ray intensity, and the ambient temperature parameter, and monitor a stability of the surface density measurement system according to the monitoring index;

a time interval setting module, configured to set a data sampling interval according to a preset system parameter of the surface density measurement system;

a sampling processing module, configured to, according to the data sampling interval, continuously sample N pieces of data using a median average filtering algorithm, remove extreme values, calculate an arithmetic mean value of N-2 pieces of data, and eliminate a sampling value deviation of the arithmetic mean value to obtain surface density sampling data, the sampling processing module being connected to the time interval setting module;

a PID parameter tuning module, configured to perform fuzzification processing on the surface density sampling data, determine a fuzzy rule, and perform optimization in real time according to the fuzzy rule and by means of fuzzy reasoning, to obtain applicable PID parameters, the PID parameter tuning module being connected to the sampling processing module; and

a servo motor control module, configured to, according to the applicable PID parameters, control a servo motor of the surface density measurement system using a genetic algorithm, the servo motor control module being connected to the PID parameter tuning module.

11. The genetic algorithm optimization-based fuzzy PID control apparatus as claimed in claim 10, wherein the system stability monitoring module comprises:

a standard electrode plate quality processing unit, configured to retrieve the preset standard electrode plate quality using a following logic:

$$m_{electrode\ plate} = \frac{1}{\lambda} \ln \frac{I_0}{I_{electrode\ plate}} .$$

a measured electrode plate quality processing unit, configured to retrieve the measured electrode plate quality using a following logic:

$$m_{sample} = \frac{1}{\lambda} \ln \frac{I_0}{I_{sample}} \Rightarrow \lambda = \frac{1}{m_{sample}} \ln \frac{I_0}{I_{sample}} ;$$

where $I_0$ represents a ray intensity before penetrating a material, $I_{sample}$ represents a ray intensity after penetrating a sample, $I_{electrode\ plate}$ represents a ray intensity after penetrating an electrode plate, $m_{sample}$ represents a standard plate quality, $m_{electrode\ plate}$ represents the measured electrode plate quality, and $\lambda$ represents an absorption coefficient per unit area of a film; and

a monitoring index processing unit, configured to retrieve the monitoring index according to the ray intensity after penetrating the sample and the ray intensity before penetrating the material:

$$T = \ln \frac{I_0}{I_{sample}} .$$

**12.** The genetic algorithm optimization-based fuzzy PID control apparatus as claimed in claim 11, wherein, in the measured electrode plate quality processing unit, a relationship between the preset standard electrode plate quality, the measured electrode plate quality, the ray intensity after penetrating the sample, and the ray intensity before penetrating the material is expressed according to a following logic:

$$m_{electrode\ plate} = \mathrm{m}_{sample} \cdot \frac{\ln \frac{I_0}{I_{electrode\ plate}}}{\ln \frac{I_0}{I_{sample}}} \ .$$

**13.** The genetic algorithm optimization-based fuzzy PID control apparatus as claimed in claim 10, wherein the time interval setting module comprises:

a time interval retrieval unit, configured to retrieve an interval time according to an oven length and a coating speed of the surface density measurement system;
an interval count processing unit, configured to determine a sampling interval count according to a scanning period of the surface density measurement system; and
a sampling interval processing unit, configured to determine the data sampling interval according to the interval time and the sampling interval count.

**14.** The genetic algorithm optimization-based fuzzy PID control apparatus as claimed in claim 10, wherein the PID parameter tuning module comprises:

a fuzzification processing and membership degree acquisition unit, configured to process the surface density sample data to obtain a deviation value and a deviation change value, acquire a deviation range function and a deviation increment range function according to the deviation value and the deviation change value, perform fuzzification processing to obtain a deviation fuzzy subset and a deviation change fuzzy subset, and determine a membership degree of a deviation on the fuzzy subset and a membership degree of a deviation change on the fuzzy subset according to the deviation fuzzy subset and the deviation change fuzzy subset;
a fuzzy rule design unit, configured to establish a fuzzy reasoning rule base to design the fuzzy rule of the PID parameters, to acquire a fuzzy reasoning result; and
a defuzzification unit, configured to perform a defuzzification operation according to the fuzzy reasoning result to acquire the applicable PID parameters.

**15.** The genetic algorithm optimization-based fuzzy PID control method as claimed in claim 14, wherein the fuzzification processing and membership degree acquisition unit comprises:

a deviation range assembly, configured to express the deviation range function using a following logic:

$$f(e) = \frac{6 * e}{V_{max} - V_{min}} \ ;$$

an increment range assembly, configured to express the deviation increment range function using a following logic:

$$f(ec) = \frac{6 * ec}{2(V_{max} - V_{min})} \ ;$$

and

a triangular membership degree processing assembly, configured to design a triangular membership degree function using a following logic:

$$Z_0 = \frac{\sum\limits_{i=0}^{n} M_i \bullet F_i}{\sum\limits_{i=0}^{n} M_i}$$ ;

where F is a fuzzy quantization value and M is a membership degree value.

16. The genetic algorithm optimization-based fuzzy PID control apparatus as claimed in claim 10, wherein the servo motor control module comprises:

a surface density and PID parameter relationship processing unit, configured to acquire a target surface density, an actual surface density, and the applicable PID parameters and retrieve a relationship between a surface density and the PID parameters according to the target surface density, the actual surface density, and the applicable PID parameters:

$$e(k) = m_t(k) - m_c(k)$$ ;

where mt represents the target surface density, $m_c$ represents the actual surface density, $e_k$, $e_{k-1}$, and $e_{k-2}$ represent differences between the actual surface density and the target surface density at times k-1, k-2, and k-3 respectively;
a potential parameter processing unit, configured to retrieve a potential parameter according to the relationship between the surface density and the PID parameters:

$$\Delta U = k_p(e_k - e_{k-1}) + k_i e_k + k_d[(e_k - e_{k-1}) + (e_{k-1} - e_{k-2})]$$ ; and

a servo motor adjustment unit, configured to control an adjustment state of the servo motor according to the potential parameter ΔU.

17. The genetic algorithm optimization-based fuzzy PID control apparatus as claimed in claim 10, wherein, in the servo motor control module, according to the applicable PID parameters, a PID control signal is obtained by processing using the genetic algorithm:

$$U(t) = k_p[e(t) + \frac{1}{k_i} \int_0^t e(t)dt + k_d \frac{de(t)}{dt}]$$ ;

in the genetic algorithm, a transfer function is determined using the following logic:

$$D(s) = k_p(1 + \frac{1}{k_i s} + k_d s)$$ ;

where $k_p$ is a proportionality factor, $k_i$ is an integral time constant, $k_d$ is a differential time constant, e(t) is a deviation, and u(t) is a control quantity.

18. The genetic algorithm optimization-based fuzzy PID control apparatus as claimed in claim 10, wherein, in the servo motor control module, the applicable PID parameters are initialized and assigned using the genetic algorithm, and an integral performance index of an error absolute value time is retrieved as a minimum objective function for parameter selection, wherein the minimum objective function for parameter selection is determined using a following logic:

$$J = \begin{cases} \int\limits_0^\infty (w_1|e_t| + w_2 u^2(t))dt + w_3 t_u, & ey(t) > 0 \\ \int\limits_0^\infty (w_1|e_t| + w_2 u^2(t) + w_4|ey(t)|)dt + w_3 t_u, & ey(t) < 0 \end{cases} ;$$

where e(t) is a system error, u(t) is an output of a controller, and $t_u$ is a step signal rise time, $w_1$, $w_2$, and $w_3$ are weights corresponding to e(t), u(t), and $t_u$ respectively, cy(t) =y(t)-y(t-1), y(t) is an output of a control object, and $w_4$ is a weight.

19. A genetic algorithm optimization-based fuzzy Proportional-Integral-Derivative (PID) control device, comprising: a memory, a processor, a communication interface, and a bus;

the memory, the processor, and the communication interface are connected through the bus and communicate with each other;
the memory is configured to store a program code; and
the processor runs a program corresponding to the executable program code by reading the executable program code stored in the memory, so as to perform a genetic algorithm optimization-based fuzzy PID control method, wherein the genetic algorithm optimization-based fuzzy PID control method comprises:

acquiring a preset standard electrode plate quality, a measured electrode plate quality, and a system default ray intensity, acquiring an ambient temperature parameter of a surface density measurement system according to a preset temperature correction mechanism, retrieving a monitoring index according to the preset standard electrode plate quality, the measured electrode plate quality, the system default ray intensity, and the ambient temperature parameter, and monitoring a stability of the surface density measurement system according to the monitoring index;
setting a data sampling interval according to a preset system parameter of the surface density measurement system;
according to the data sampling interval, continuously sampling N pieces of data using a median average filtering algorithm, removing extreme values, calculating an arithmetic mean value of the N-2 pieces of data, and eliminating a sampling value deviation of the arithmetic mean value to obtain surface density sampling data;
performing fuzzification processing on the surface density sampling data, determining a fuzzy rule, and performing optimization in real time according to the fuzzy rule and by means of fuzzy reasoning, to obtain applicable PID parameters; and
according to the applicable PID parameters, controlling a servo motor of the surface density measurement system using a genetic algorithm.

Fig. 1

Start

S1

The stability of a measurement system is monitored

S2

A data sampling interval is set

S3

Data parsing and processing is performed

S4

Fuzzy Proportional-Integral-Derivative (PID) closed-loop control is performed

S5

A servo motor is controlled according to parameters P, I, and D

End

Fig. 2

**Fig. 3**

Scanning path

Sampling length

Sampling interval

**Fig. 4**

Empty foil region

Weak region

Film region

T-block

Weak region

Empty foil region

Fig. 5

Fig. 6

Fig. 7

Target surface density: $m_t$
Actual surface density: $m_c$ — S51

Set PID parameters
( $k_p, k_i, k_d$ ) — S52

Calculate
$$e(k) = m_t(k) - m_c(k)$$ — S53

$$\Delta U = k_p(e_k - e_{k-1}) + k_i e_k + k_d[(e_k - e_{k-1}) + (e_{k-1} - e_{k-2})]$$ — S54

Whether ΔU is greater than 0 — S55

Y

Adjust a servo motor — S56

Not adjust — S57

Return

Fig. 8

```
  ┌─────────┐        ┌──────────────────────┐    ⌐ S51'
  │  Start  │───────▶│  Set parameters and  │
  └─────────┘        │       encode         │
                     └──────────────────────┘
                                │
                                ▼
                     ┌──────────────────────┐    ⌐ S52'
                     │ Initialize a population│
                     │        GEN=1          │
                     └──────────────────────┘
                                │
                                ▼
                     ┌──────────────────────┐    ⌐ S53'
         ┌──────────▶│ Calculate a target   │
         │           │       fitness        │
         │           └──────────────────────┘
         │                      │
         │                      ▼            S54'           Yes
         │                   ◇────────◇
         │                  ╱  Meet the ╲─────────────┐
         │                  ╲requirements╱            │
         │                   ◇────────◇               │
         │                      │  No                 │
         │                      ▼        S55'          │
         │           ┌──────────────────────┐         │
         │           │ Perform selection,   │         │
         │           │ crossover, and       │         │
         │           │ mutation             │         │
         │           └──────────────────────┘         │
         │                      │                      │
         │  S57'    Yes         ▼                      │
  ┌──────────────┐          ◇────────◇   S56'          │
  │ GEN=GEN+1    │◀─────────╱ GEN<The  ╲               │
  └──────────────┘          ╲ maximum  ╱               │
                            ◇ number   ◇               │
                             ╲of times ╱               │
                              ◇──────◇                 │
                                │  No                  │
                                ▼        S58'          │
  ┌─────────┐        ┌──────────────────────┐         │
  │   End   │◀───────│       Decode         │◀────────┘
  └─────────┘        └──────────────────────┘
```

Fig. 9

Genetic algorithm optimization-based fuzzy PID control device 300

| Memory 301 | Processor 302 | Communication interface 303 |

Bus 304

## INTERNATIONAL SEARCH REPORT

| International application No. |
|---|
| **PCT/CN2023/130682** |

| A. | CLASSIFICATION OF SUBJECT MATTER |
|---|---|
| | G05B11/42(2006.01)i |

According to International Patent Classification (IPC) or to both national classification and IPC

| B. | FIELDS SEARCHED |
|---|---|

Minimum documentation searched (classification system followed by classification symbols)

IPC: G05B

Documentation searched other than minimum documentation to the extent that such documents are included in the fields searched

Electronic data base consulted during the international search (name of data base and, where practicable, search terms used)

CNABS, CNTXT, VEN, ENTXTC, CNKI: 被测, 标准, 极片, 样本, 电池, 监控, 指标, 面密度, 模糊, 规则, 强度, 射线, 涂布, 温度, 稳定性, 遗传, 质量, PID, proportional, integral, derivative fuzzy, battery, genetic, algorithm, ray, intensity, surface, density

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115305526 A (BLUE ICE RIVER (CHANGZHOU) PRECISION MEASUREMENT TECHNOLOGY CO., LTD.) 08 November 2022 (2022-11-08) description, paragraphs 0021-0038 | 1-19 |
| Y | CN 102968055 A (SHANGHAI DIANJI UNIVERSITY) 13 March 2013 (2013-03-13) description, paragraphs 0032-0110 | 1-19 |
| A | CN 110385244 A (DONGGUAN TAFEL NEW ENERGY TECHNOLOGY CO., LTD. et al.) 29 October 2019 (2019-10-29) entire document | 1-19 |
| A | CN 105280957 A (SHANDONG DAWANG JINTAI GROUP CO., LTD.) 27 January 2016 (2016-01-27) entire document | 1-19 |
| A | CN 116140161 A (HUIZHOU YINGHE TECHNOLOGY CO., LTD.) 23 May 2023 (2023-05-23) entire document | 1-19 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 July 2024** | **17 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/130682**

### C. DOCUMENTS CONSIDERED TO BE RELEVANT

| Category* | Citation of document, with indication, where appropriate, of the relevant passages | Relevant to claim No. |
|---|---|---|
| A | KR 19980084979 A (LG INDUSTRIAL SYSTEMS CO., LTD.) 05 December 1998 (1998-12-05)<br>entire document | 1-19 |
| A | US 5295061 A (SANYO ELECTRIC CO., LTD.) 15 March 1994 (1994-03-15)<br>entire document | 1-19 |
| A | 代英男 等 (DAI, Yingnan et al.). "离子电池双面涂布机的关键技术与系统性解决方案 (Non-official translation: the Key Technology and Systematic Solution of Ion Battery Double-Side Coating Machine)"<br>重型机械 (Heavy Machinery), No. 2023, 04, 20 July 2023 (2023-07-20), pages 24-32<br>entire document | 1-19 |

Form PCT/ISA/210 (second sheet) (July 2022)

**INTERNATIONAL SEARCH REPORT**
Information on patent family members

International application No.

**PCT/CN2023/130682**

| Patent document cited in search report | | | Publication date (day/month/year) | Patent family member(s) | | | Publication date (day/month/year) |
|---|---|---|---|---|---|---|---|
| CN | 115305526 | A | 08 November 2022 | None | | | |
| CN | 102968055 | A | 13 March 2013 | None | | | |
| CN | 110385244 | A | 29 October 2019 | None | | | |
| CN | 105280957 | A | 27 January 2016 | CN | 105280957 | B | 30 June 2017 |
| CN | 116140161 | A | 23 May 2023 | None | | | |
| KR | 19980084979 | A | 05 December 1998 | KR | 100310609 | B1 | 17 December 2001 |
| US | 5295061 | A | 15 March 1994 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 116140161 A
- CN 105280957 A